# DEMANDE DE BREVET EUROPEEN

(11) **EP 3 122 042 A1**
(43) Date de publication de la demande: **25.01.2017**
(21) Numéro de dépôt: 16180632.8
(22) Date de dépôt: 21.07.2016
(51) Int. Cl.: H04N 13/04

(54) **DISPOSITIF DE VISUALISATION DIFFÉRENCIÉE MUNI DE LUNETTES ACTIVES**

(30) Priorité: 23.07.2015 FR 1556980
(71) Demandeur: VALEO VISION, 93012 Bobigny Cedex (FR)
(72) Inventeur: EL IDRISSI, Hafid, 93500 PANTIN (FR); BEEV, Kostadin, 77184 EMERAINVILLE (FR); HUE, David, 95430 BUTRY SUR OISE (FR); GRATIEN, Steed, 77340 PONTAULT COMBAULT (FR)

(57) **Abrégé**

La présente invention concerne un dispositif de visualisation différenciée, notamment pour véhicule automobile, comprenant un système lumineux (2, 12) configuré pour émettre sélectivement des premiers (4, 14) et des deuxièmes (5, 15) signaux lumineux, le dispositif (1, 10) comporte en outre une première (7, 17) paire de lunettes actives destinées à être portées par un premier observateur, la première (7, 17) paire de lunettes étant munie d'un premier écran (9, 19) capable de permettre la vision du premier observateur dans une première configuration et d'occulter la vision du premier observateur dans une deuxième configuration, le système lumineux (2, 12) et la première (7, 17) paire de lunettes étant synchronisés de sorte que le premier écran (9, 19) soit dans la première configuration lorsque le système lumineux (2, 12) émet les premiers (4, 14) signaux, et dans la deuxième configuration lorsque le système lumineux (2, 12) émet les deuxièmes (5, 15) signaux.

## Description

La présente invention concerne un dispositif de visualisation différenciée muni de lunettes actives.

Dans un même lieu, plusieurs personnes peuvent souhaiter percevoir ou observer des signaux lumineux différents bien qu'ils soient dans une même pièce ou regardent un même afficheur.

Ainsi, on peut par exemple vouloir un éclairage hétérogène pour chaque personne afin de ressentir une ambiance lumineuse différente, que cela soit en intensité ou en couleur. Plus particulièrement, au sein d'un habitacle de véhicule, le conducteur et le passager ont souvent besoin d'un éclairage adapté à chacun, le conducteur demandant généralement un niveau d'intensité d'éclairage réduit par rapport au passager. En effet, le passager effectue généralement des activités indépendantes du pilotage, telle que la lecture, tandis que le conducteur préfère ne pas être gêné par un éclairage intense pour regarder la route.

Aujourd'hui, il n'existe pas de système qui permette à deux personnes situées dans un même endroit, de percevoir un éclairage différent, notamment à partir d'une même source lumineuse.

Dans le domaine de l'affichage, on a aussi cherché à afficher des données distinctes qui puissent être vues par deux observateurs de façon indépendante différentes avec un afficheur unique. Il existe notamment des afficheurs capables d'afficher simultanément des données, telles que des images ou informations, destinées à deux observateurs différents, chaque observateur ne voyant que les informations qui lui sont destinées. Autrement dit, l'afficheur est conçu pour permettre la vision de certaines informations à un observateur, et d'autres informations à un autre observateur, sans qu'ils puissent voir les informations destinées à l'autre observateur.

Un exemple de fonctionnement d'un tel afficheur est basé sur un entrelacement de deux images qui sont affichées simultanément. Les deux images sont découpées en lanières verticales et agencées alternativement. Selon la position de l'observateur, et donc de son point de vue, il voit l'une ou l'autre des images en la reconstituant. Une application possible de ces systèmes est par exemple dans un véhicule, l'afficheur étant agencé au milieu du tableau de bord entre le conducteur et le passager de sorte que le conducteur et le passager ont des angles de vision différentes du même afficheur. Ainsi, le conducteur peut voir des informations liées à la navigation, pendant que le passager regarde un film.

Cependant, l'inconvénient d'un tel afficheur réside d'une part dans le fait que l'observateur doit conserver l'angle de vision correspondant à l'image qu'il veut voir. Ainsi, un observateur situé dans l'axe de l'afficheur observe l'entrelacement des deux images. D'autre part, l'afficheur doit être suffisamment large pour afficher des tailles d'images suffisantes, ce qui implique une largeur d'afficheur deux fois plus grande pour une même taille d'image

L'invention vise donc à obtenir un dispositif de visualisation différenciée qui améliore la situation et évite les défauts précités, et qui permet d'une part de percevoir un éclairage différent dans un même endroit, ou d'obtenir un affichage d'au moins deux images différentes sur un même afficheur pour au moins deux observateurs.

A cette fin, l'invention concerne un dispositif de visualisation différenciée, notamment pour véhicule automobile, comprenant un système lumineux configuré pour émettre sélectivement des premiers et des deuxièmes signaux lumineux, le dispositif comporte en outre une première paire de lunettes actives destinées à être portées par un premier observateur, la première paire de lunettes étant munie d'un premier écran capable de permettre la vision du premier observateur dans une première configuration et d'occulter la vision du premier observateur dans une deuxième configuration, le système lumineux et la première paire de lunettes étant synchronisés de sorte que le premier écran soit dans la première configuration lorsque le système lumineux émet les premiers signaux, et dans la deuxième configuration lorsque le système lumineux émet les deuxièmes signaux.

Ainsi, il suffit pour un observateur de porter les lunettes actives pour voir seulement les signaux lumineux qui lui sont destinés, sans être gêné par d'autres signaux lumineux émis par le système lumineux. Le dispositif permet en outre d'utiliser un système lumineux unique pour émettre sélectivement deux signaux différents destinés à deux observateurs différents.

Ce dispositif fonctionne aussi bien pour un système d'éclairage que pour un écran qui affiche des informations destinées à différentes personnes. En effet, dans le cas d'un système d'éclairage, l'observateur ne perçoit que l'éclairage des premiers signaux lumineux. Et dans le cas d'un afficheur de données, l'observateur ne voit sur l'écran que les premiers signaux.

Selon différents modes de réalisation de l'invention, qui pourront être pris ensemble ou séparément :
- ledit dispositif comprend une deuxième paire de lunettes actives destinées à être portées par un second observateur, la deuxième paire de lunettes étant munie d'un deuxième écran, le système lumineux et la deuxième paire de lunettes étant synchronisées de sorte que le deuxième écran est dans la première configuration lorsque le système lumineux émet les deuxièmes signaux, et dans la deuxième configuration lorsque le système lumineux émet les premiers signaux,
- dans la première configuration, le premier et/ou le deuxième écran est configuré pour permettre le passage des rayons lumineux à travers lui,
- dans la première configuration, le premier et/ou le deuxième écran est sensiblement transparent,
- dans la deuxième configuration, le premier et/ou le deuxième écran est configuré pour empêcher le passage des rayons lumineux à travers lui,
- dans la deuxième configuration, le premier et/ou le deuxième écran est occultant par absorption des rayons lumineux,
- dans la deuxième configuration, le premier et/ou le deuxième écran est occultant par réflexion des rayons lumineux,
- le système lumineux est configuré pour présenter alternativement les premiers et les deuxièmes signaux,
- les premiers et les deuxièmes signaux sont des signaux distincts,
- les premiers signaux transportent une première information et les deuxièmes signaux transportent une deuxième information, la première et la deuxième information étant décorrélées entre elles,
- le système lumineux comprend un afficheur, les signaux lumineux étant des données affichables sur l'afficheur,
- l'afficheur est un afficheur tête haute,
- le système lumineux comprend des éléments lumineux d'un tableau de bord d'un véhicule, les signaux lumineux étant émis par ces éléments lumineux,
- le système lumineux comprend un dispositif d'éclairage de l'habitacle d'un véhicule, les signaux lumineux étant émis par ce dispositif d'éclairage de manière à éclairer l'habitacle,
- le système lumineux est configuré pour émettre les signaux lumineux par modulation de largeur d'impulsions,
- la première paire de lunettes est agencée pour commander la commutation du premier écran entre la première et la deuxième configuration par modulation de largeur d'impulsions,
- la deuxième paire de lunettes est agencée pour commander la commutation du deuxième écran entre la première et la deuxième configuration par modulation de largeur d'impulsions,
- le système lumineux est configuré pour émettre les premiers signaux lumineux selon une première modulation de largeur d'impulsions et les deuxièmes signaux selon une seconde modulation de largeur d'impulsions,
- les première et seconde modulations sont déphasées l'une par rapport à l'autre. Le cas échéant, les première et seconde modulations peuvent être en opposition de phase.
- les rapports cycliques des première et deuxième modulations sont identiques,
- les rapports cycliques des première et deuxième modulations sont distincts,
- la modulation est effectuée à fréquence fixe,
- la fréquence de modulation est supérieure à 120Hz, de préférence supérieure à 200Hz,
- la modulation de largeur d'impulsions commandant la commutation du premier écran est synchronisée avec la modulation de largeur d'impulsion des premiers signaux lumineux,
- la modulation de largeur d'impulsions commandant la commutation du deuxième écran est synchronisée avec la modulation de largeur d'impulsion des deuxièmes signaux lumineux,
- les rapports cycliques et les phases des modulations sont identiques,
- le premier et/ou le deuxième écran est muni d'une couche à polarisation verticale et d'une couche à polarisation horizontale,
- le premier et/ou le deuxième écran est muni d'une couche à cristaux-liquides agencée entre les deux couches de polarisation,
- l'actionnement de la couche à cristaux-liquides permet de rendre l'écran sensiblement occultant ou sensiblement transparent,
- le système lumineux comprend des moyens de génération de signaux configurés pour transmettre à l'afficheur les premiers et deuxièmes signaux.

L'invention se rapporte également à un système lumineux configuré pour émettre alternativement des premiers et des deuxièmes signaux lumineux synchronisés avec au moins une paire de lunettes actives.

L'invention se rapporte encore à une paire de lunettes actives pour un tel dispositif de visualisation différenciée.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre de façon schématique, le fonctionnement d'un dispositif de visualisation dans un premier mode de réalisation avec un dispositif d'affichage,
- la figure 2 illustre de façon schématique, le fonctionnement d'un dispositif de visualisation dans un second mode de réalisation avec un système d'éclairage.

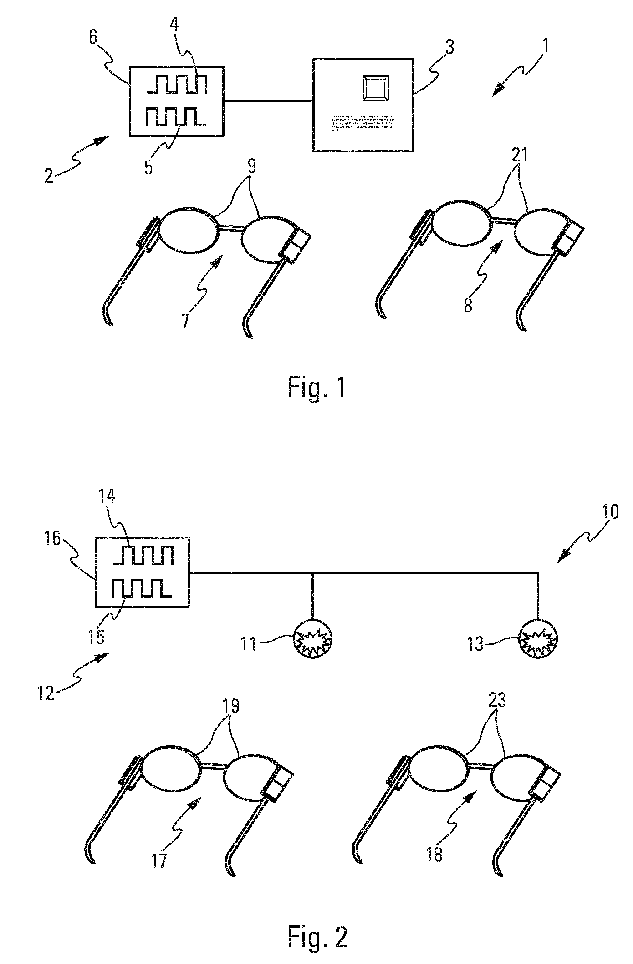

La figure 1 montre un premier mode de réalisation d'un dispositif de visualisation différenciée 1, notamment pour un véhicule automobile. Le dispositif 1 comprend un système lumineux 2 muni d'un afficheur 3 de données, par exemple un afficheur à cristaux liquides de type LCD (pour « Liquid Crystal Display » en anglais). L'afficheur 3 est, par exemple, agencé sur le tableau de bord du véhicule, non représenté sur les figures, entre la place du conducteur et celle du passager de manière à pouvoir être vu par deux personnes assises auxdites places. Dans une variante de réalisation, le système lumineux 2 est un afficheur tête haute, de type HUD (pour « Head Up Display » en anglais).

L'afficheur 3 est configuré pour émettre sélectivement des premiers 4 et des deuxièmes 5 signaux lumineux. Autrement dit, l'afficheur 3 présente successivement des premiers 4 signaux lumineux, qui sont par exemple des données de navigation ou de l'état du véhicule, et des deuxièmes 5 signaux lumineux, qui sont par exemple liés à l'affichage d'une vidéo de divertissement. Les premiers 4 signaux sont destinés au conducteur du véhicule, et les deuxièmes 5 signaux sont destinés à être vus par un passager du véhicule.

Pour cela, le système lumineux 2 comprend des moyens 6 de génération de signaux configurés pour transmettre à l'afficheur les premiers 4 et les deuxièmes 5 signaux. Ainsi, lorsque les moyens 6 de génération transmettent les premiers 4 signaux, les premiers signaux apparaissent sur l'afficheur 3, et lorsque les moyens 6 de génération transmettent les deuxièmes 5 signaux, les deuxièmes signaux apparaissent sur l'afficheur 3. Les premiers et les deuxièmes signaux sont ici des signaux distincts. Par exemple, les premiers signaux transportent une première information et les deuxièmes signaux transportent une deuxième information, la première et la deuxième information étant décorrélées entre elles.

Les moyens 6 de génération sont, de préférence, configurés pour transmettre les premiers 4 et les deuxièmes 5 signaux lumineux par modulation de largeur d'impulsions. La modulation consiste à afficher périodiquement un signal lumineux pendant un temps t1, et à ne pas les afficher pendant un temps t2, les temps t1 et t2 formant la période de la modulation du signal lumineux. La modulation est effectuée à une fréquence fixe, de préférence au moins 100 Hz, voire au moins 125Hz, et de préférence au moins 200Hz pour avoir un confort de visibilité optimal par l'oeil humain sans percevoir la modulation. De préférence, le système lumineux est configuré pour émettre les premiers signaux lumineux selon une première modulation de largeur d'impulsions et les deuxièmes signaux selon une seconde modulation de largeur d'impulsions.

En outre, le système lumineux 2 est configuré pour émettre alternativement les premiers 4 et les deuxièmes 5 signaux lumineux, pour que des deux passagers perçoivent chacun le signal lumineux 4, 5 qui lui est destiné, et ainsi regarder l'afficheur 3 en même temps. Par exemple, pendant le temps t1, l'afficheur 3 affiche seulement les premiers 4 signaux lumineux sur l'afficheur, et pendant le temps t2, il affiche seulement les deuxièmes 5 signaux, les temps t1 et t2 formant la période de la même modulation. La modulation des premiers 4 et deuxièmes 5 signaux lumineux est en opposition de phase. La modulation alternée donne aux deux observateurs la perception de regarder les premiers 4 et les deuxièmes 5 signaux en même temps.

Afin que le conducteur n'observe que les premiers 4 signaux, le dispositif 1 comporte une première 7 paire de lunettes actives destinées à être portées par un premier observateur, ici le conducteur. Le dispositif 1 comporte également une deuxième 8 paire de lunettes actives destinées à être portées par un deuxième observateur, ici le passager. Les lunettes actives sont configurées pour sélectivement permettre ou empêcher la vision du porteur des lunettes 7, 8.

A cette fin, la première 7 paire de lunettes est munie d'un premier écran 9 et la deuxième paire 8 de lunettes d'un deuxième écran 21. Chaque écran 9, 21 est capable, dans une première configuration, de permettre la vision du premier observateur, et dans une deuxième configuration, d'occulter la vision du premier observateur. Dans la première configuration, l'écran est sensiblement transparent et transmet la lumière incidente destinée au premier observateur, alors que dans la deuxième configuration, l'écran est sensiblement occultant et ne transmet pas la lumière incidente destinée au premier observateur. Autrement dit, dans la première configuration, le porteur des lunettes voit à travers, et dans la deuxième configuration, il ne voit pas. Dans la première configuration, le premier et/ou le deuxième écran est configuré pour permettre le passage des rayons lumineux à travers lui. Par exemple, le premier et/ou le deuxième écran est sensiblement transparent. Dans la deuxième configuration, le premier et/ou le deuxième écran est configuré pour empêcher le passage des rayons lumineux à travers lui, par exemple en étant occultant par absorption des rayons lumineux.

Le premier 9 et le deuxième 21 écran sont, par exemple, munis d'une couche à polarisation verticale, d'une couche à polarisation horizontale, et d'une couche à cristaux-liquides agencée entre les deux couches de polarisation. L'actionnement de la couche à cristaux-liquides permet de rendre l'écran sensiblement occultant ou sensiblement transparent. Le fonctionnement d'une telle paire de lunettes est décrit dans la demande de brevet FR 2988493.

Selon l'invention, le système lumineux 2 et la première 7 paire de lunettes sont synchronisés de sorte que le premier écran 9 est dans la première configuration (écran transparent), lorsque le système lumineux 2 émet les premiers 4 signaux lumineux, et dans la deuxième configuration (écran occultant), lorsque le système lumineux 2 émet les deuxièmes 5 signaux lumineux. Ainsi, lorsque l'afficheur 3 affiche les premiers 4 signaux, le conducteur peut les voir, et lorsque l'afficheur affiche les deuxièmes 5 signaux, le conducteur ne peut pas les voir.

De façon similaire, le système lumineux 2 et la deuxième 8 paire de lunettes sont synchronisées de sorte que le deuxième écran 21 permette la vision du passager, lorsque le système lumineux 2 émet les deuxièmes 5 signaux, et occulte la vision du passager lorsque le système lumineux 2 émet les premiers 4 signaux. Ainsi, lorsque l'afficheur 3 affiche les premiers 4 signaux, le passager ne peut pas les voir, et lorsque l'afficheur affiche les deuxièmes signaux, le passager peut les voir.

Ainsi, comme pour l'émission des signaux lumineux 4,5, le premier écran 9 des première 7 lunettes et le deuxième écran 21 des deuxième 8 lunettes, sont chacun soit dans la première configuration, soit dans la deuxième configuration par modulation de largeur d'impulsions. Un écran est alternativement dans la première configuration, puis dans la deuxième configuration, et ceci de façon périodique. Les fréquences de modulation des deux écrans 9, 21 sont synchronisées avec les fréquences de modulation des premiers 4 et deuxièmes 5 signaux destinés à l'afficheur.

La première paire de lunettes est agencée pour commander la commutation du premier écran entre la première et la deuxième configuration par modulation de largeur d'impulsions. De même, la deuxième paire de lunettes est agencée pour commander la commutation du deuxième écran entre la première et la deuxième configuration par modulation de largeur d'impulsions. La modulation de largeur d'impulsions commandant la commutation du premier écran est synchronisée avec la modulation de largeur d'impulsion des premiers signaux lumineux, De même, la modulation de largeur d'impulsions commandant la commutation du deuxième écran est synchronisée avec la modulation de largeur d'impulsion des deuxièmes signaux lumineux.

De préférence, le premier écran 9 est en phase avec la période de modulation des premiers signaux, et le deuxième écran 21 est en phase avec la période de modulation des deuxièmes signaux. Ainsi, pendant le temps t1, le premier écran 9 de la première 7 paire de lunettes est dans la première configuration, et le deuxième écran 21 de la deuxième 7 paire de lunettes est dans la deuxième configuration. Et pendant le temps t2, le premier écran 9 de la première 7 paire de lunettes est dans la deuxième configuration, et le deuxième écran 21 de la deuxième 7 paire de lunettes est dans la première configuration. Les premier 9 et deuxième 21 écrans sont modulés à même fréquence en opposition de phase. Grâce aux lunettes, le conducteur ne voit que les premiers 4 signaux lumineux, et le passager ne voit que les deuxièmes 5 signaux lumineux.

Dans une variante de réalisation, les premiers et/ou les deuxièmes signaux sont des signaux destinés à être vus en trois dimensions. Les signaux affichés ont par conséquent des composantes différentes pour chaque oeil du même observateur. Pour les voir, les lunettes ont un écran par verre, les écrans d'une même paire de lunette étant configurés pour être alternativement dans la première et la deuxième configuration. Ainsi, les écrans d'une même paire de lunettes sont, d'une part configurés pour être simultanément dans la deuxième configuration, lorsque les signaux affichés ne sont pas destinés au porteur des lunettes, et d'autre part configurés pour être alternativement dans la première configuration entre eux, lorsque les composantes d'un même signal sont affichés, et donc destinées au même porteur des lunettes.

Dans un deuxième mode de réalisation, représenté sur la figure 2, le dispositif de visualisation différenciée 10 comprend un dispositif d'éclairage comme système lumineux 12, notamment d'un habitacle de véhicule automobile. Le système lumineux 12 comprend ici deux moyens d'éclairages, par exemple deux lampes 11, 13 d'intensité ou de couleur différentes. Les premiers 14 signaux lumineux sont ici émis par une première lampe 11 et les deuxièmes 16 signaux lumineux par une deuxième lampe 13. Les lampes 11, 13 sont commandés par une unité de commande 16.

Ce dispositif d'éclairage sert ici à éclairer l'habitacle de manière différente pour le conducteur et le passager, sans que l'un ne perçoive l'éclairage destiné à l'autre. Comme dans le premier mode de réalisation, la première lampe 11 est synchronisée à une fréquence de modulation avec une première 17 paire de lunettes munie d'un premier écran 19, et la deuxième lampe 13 est synchronisée, à la même fréquence de modulation, avec une deuxième 18 paire de lunettes munie d'un deuxième écran 23. Les première 17 et deuxième 18 paires de lunettes fonctionnent de manière identique à celles du premier mode de réalisation. Grâce à l'invention, le conducteur et le passager perçoivent deux éclairages différents, l'un correspondant à celui de la première lampe 11, et l'autre à celui de la deuxième lampe 13.

Dans un troisième mode de réalisation, non représenté sur les figures, le système lumineux comprend des éléments lumineux d'un tableau de bord de véhicule, les signaux lumineux étant émis par ces éléments lumineux. Les éléments lumineux sont par exemple disposés sur les boutons du tableau de bord. Le dispositif de visualisation différenciée fonctionne comme dans le premier ou le deuxième mode de réalisation. Ainsi, le conducteur et le passager ne voient que l'éclairage des boutons lumineux qui leurs sont destinés, par exemple ceux dont ils peuvent avoir l'utilité.

## Revendications

1. Dispositif de visualisation différenciée, notamment pour véhicule automobile, comprenant un système lumineux (2, 12) configuré pour émettre sélectivement des premiers (4, 14) et des deuxièmes (5, 15) signaux lumineux, le dispositif (1, 10) comporte en outre une première (7, 17) paire de lunettes actives destinées à être portées par un premier observateur, la première (7, 17) paire de lunettes étant munie d'un premier écran (9, 19) capable de permettre la vision du premier observateur dans une première configuration et d'occulter la vision du premier observateur dans une deuxième configuration, le système lumineux (2, 12) et la première (7, 17) paire de lunettes étant synchronisés de sorte que le premier écran (9, 19) soit dans la première configuration lorsque le système lumineux (2, 12) émet les premiers (4, 14) signaux, et dans la deuxième configuration lorsque le système lumineux (2, 12) émet les deuxièmes (5, 15) signaux.

2. Dispositif selon la revendication 1, comprenant une deuxième (8, 18) paire de lunettes actives destinées à être portées par un second observateur, la deuxième (8, 18) paire de lunettes étant munie d'un deuxième écran (21, 23), le système lumineux (2, 12) et la deuxième paire (8, 18) de lunettes étant synchronisées de sorte que le deuxième écran (21, 23) est dans la première configuration lorsque le système lumineux (2, 12) émet les deuxièmes (5, 15) signaux, et dans la deuxième configuration lorsque le système lumineux (2, 12) émet les premiers (5, 15) signaux.

3. Dispositif selon l'une quelconque des revendications précédentes, dans lequel le système lumineux (2) comprend un afficheur (3), les signaux lumineux étant des données affichables sur l'afficheur.

4. Dispositif selon la revendication 3, dans lequel l'afficheur (3) comprend un afficheur tête haute.

5. Dispositif selon l'une quelconque des revendications 1 à 4, dans lequel le système lumineux comprend des éléments lumineux d'un tableau de bord d'un véhicule, les signaux lumineux étant émis par ces éléments lumineux.

6. Dispositif selon l'une quelconque des revendications 1 à 5, dans lequel le système lumineux (12) comprend un dispositif d'éclairage de l'habitacle d'un véhicule, les signaux lumineux (14, 15) étant émis par ce dispositif d'éclairage de manière à éclairer l'habitacle.

7. Dispositif selon l'une quelconque des revendications précédentes, dans lequel le système lumineux (2, 12) est configuré pour émettre alternativement les premiers (4, 14) et les deuxièmes (5, 15) signaux.

8. Dispositif selon l'une quelconque des revendications précédentes, dans lequel le système lumineux (2, 12) est configuré pour émettre les signaux lumineux (4, 5, 14, 15) par modulation de largeur d'impulsions.

9. Dispositif selon l'une quelconque des revendications précédentes, dans lequel la première paire de lunettes est agencée pour commander la commutation du premier écran entre la première et la deuxième configuration par modulation de largeur d'impulsions..

10. Dispositif selon l'une quelconque des revendications 8 à 9, dans lequel la modulation est effectuée à fréquence fixe.

11. Dispositif selon la revendication 10, dans lequel la fréquence de modulation est supérieure à 120Hz, de préférence supérieure à 200Hz.

12. Dispositif selon l'une quelconque des revendications précédentes, dans lequel le premier (9, 19) et/ou le deuxième (21, 23) écran est muni d'une couche à polarisation verticale et d'une couche à polarisation horizontale.

13. Dispositif selon la revendication 12, dans lequel le premier (9, 19) et/ou le deuxième (21, 23) écran est muni d'une couche à cristaux-liquides agencée entre les deux couches de polarisation.

14. Système lumineux (2, 12) pour dispositif (1, 10) selon l'une quelconque des revendications précédentes, le système étant configuré pour émettre alternativement des premiers (4, 14) et des deuxièmes (5, 15) signaux lumineux synchronisés avec au moins une paire (7, 8, 17, 18) de lunettes actives.

15. Paire (7, 8, 17, 18) de lunettes actives pour dispositif de visualisation différenciée (1, 10) selon l'une quelconque des revendications 1 à 13.
